# EUROPÄISCHE PATENTSCHRIFT

(11) **EP 4 003 808 B1**
(45) Veröffentlichungstag und Bekanntmachung des Hinweises auf die Patenterteilung: **26.08.2026**
(21) Anmeldenummer: 20756752.0
(22) Anmeldetag: 21.07.2020
(51) Int. Cl.: B61D 27/00, F24F 5/00

(54) **SCHIENENFAHRZEUG MIT EINER KLIMAANLAGE MIT EINER KÄLTE-SPEICHEREINHEIT UND VERFAHREN ZUM BETRIEB EINES DERARTIGEN SCHIENENFAHRZEUGS**
RAIL VEHICLE WITH AN AIR-CONDITIONING SYSTEM WITH A COLD RESERVOIR UNIT, AND METHOD FOR OPERATING A RAIL VEHICLE OF SAID TYPE
VÉHICULE FERROVIAIRE COMPRENANT UNE INSTALLATION DE CLIMATISATION COMPRENANT UNE UNITÉ DE STOCKAGE DE FROID ET PROCÉDÉ POUR FAIRE FONCTIONNER UN TEL VÉHICULE FERROVIAIRE

(30) Priorität: 31.07.2019 DE 102019120719
(43) Veröffentlichungstag der Anmeldung: 01.06.2022
(73) Patentinhaber: Faiveley Transport Leipzig GmbH & Co. KG, 04435 Schkeuditz (DE)
(72) Erfinder: BOECK, Lutz, 04435 Schkeuditz (DE); KÄSTNER, Lorenz, 01445 Radebeul (DE)
(74) Vertreter: Novagraaf Group
(86) Internationale Anmeldenummer: PCT/DE2020/100636
(87) Internationale Veröffentlichungsnummer: WO 2021/018346

(56) Entgegenhaltungen:
- EP-B1- 2 570 280
- DE-A1- 19 860 057
- DE-U1- 202010 007 146
- US-A1- 2018 283 709

## Beschreibung

Die Erfindung betrifft Schienenfahrzeug mit einer Klimaanlage mit mindestens einer Kältemaschine und einer Kälte-Speichereinheit, die als ein PCM-Speicher mit einem Phasenwechselmaterial ausgestaltet ist, wobei mittels der Kältemaschine die für eine Klimatisierung des Fahrgastraumes notwendige Kälteleistung und die für eine Beladung des PCM-Speichers notwendige Kälteleistung bereitgestellt werden und wobei die im PCM-Speicher gespeicherte Kälte in ausgewählten Betriebszuständen des Schienenfahrzeuges den Baugruppen zur Klimalisierung des Fahrgastraumes zugeführt wird, wobei die Wahl zwischen den Betriebszuständen davon abhängt, ob sich das Schienenfahrzeug in einem Tunnel befindet oder nicht. Weiterhin betrifft die Erfindung ein Verfahren zum Betrieb eines derartigen Schienenfahrzeugs.

Für die Klimatisierung von Schienenfahrzeugen zur Fahrgastbeförderung sind zahlreiche technische Lösungen bekannt, mit denen eine Heizung bzw. Kühlung der Fahrgasträume realisiert wird.

So beschreibt DE 10 2009 056 968 B3 eine Klimaanlage für Schienenfahrzeuge, bei der auf dem Fahrzeugdach die zur Klimatisierung notwendigen Baugruppen angeordnet sind. Diese Baugruppen sind in einer Gerätewanne platziert. Die Gerätewanne ist nach oben mit einem separaten Bauteil abgedeckt, so dass sie einen Teil der Dachform innerhalb der Kontur des Schienenfahrzeuges ausbildet.

Diese und zahlreiche ähnliche Konstruktionen sind grundsätzlich zur Klimatisierung der Fahrgasträume in Schienenfahrzeugen geeignet. Allerdings müssen bei einigen spezifischen Einsatzbedingungen weitere Aspekte beachtet werden. Neben den technischen Vorgaben zur Funktionsweise der Klimaanlage (elektrische Strom- / Spannungsverhältnisse, Kühl- / Heizleistung, Luftvolumen usw.) werden beispielsweise zunehmend die Anforderungen bei längeren Fahrten durch Tunnel relevant, weil die Fahrwege für Hochgeschwindigkeitszüge im Langstreckenverkehr und für Nahverkehrszüge in großen Ballungszentren seit einigen Jahren oftmals mit Tunneln ausgestattet werden. Durch die Abgabe erwärmter Luft aus der Klimaanlage nach außen erhöht sich die Lufttemperatur im Tunnel stark und kann zwischen aufeinanderfolgenden Fahrzeugpassagen nur geringfügig abkühlen. Deshalb liegt es für den Fachmann an sich nahe, dass die für die Luftkühlung notwendigen Kältebaugruppen der Klimaanlage während der Fahrt in einem Tunnel abgeschaltet werden.

Eine diesbezügliche technische Lösung wird in WO 2005/014 365 A1 vorgeschlagen. Um dennoch eine funktionsgerechte Kühlung zu gewährleisten, wird das Schienenfahrzeug mit mehreren Kältemittelspeichem ausgestattet, wobei gefrorenes Wasser als Eis oder andere Flüssigkeiten niedriger Temperatur in separaten Behältern vorgehalten werden. Während einer Tunnelfahrt werden das Eis bzw. die Flüssigkeiten zur Abkühlung der Luft verwendet, so dass die eigentliche Kältemaschine abgeschaltet werden kann und nahezu keine zusätzlich erwärmte Luft in den Tunnelraum abgeführt wird. Nachteilig ist jedoch, dass der Kältemittelspeicher regelmäßig nachgefüllt werden muss.

Das regelmäßige Nachfüllen von Kältemittelspeichern ist nicht notwendig, sofern für die temporäre Speicherung von Kälte sog. PCM-Speicher ("Phase Change Material") verwendet werden, die auch als Phasenwechselspeicher oder als Latentwärmespeicher bezeichnet werden. Dabei handelt es sich funktionell um einen Wärmespeicher, der eine zugeführte thermische Energie speichert und durch einen Phasenübergang freigibt. PCM-Speicher können thermische Energie verlustarm und mit vielen Wiederholzyklen speichern. Dabei wird vorzugsweise der Phasenübergang fest - flüssig genutzt, also Erstarren - Schmelzen. Als Speichermedium kommen neben Wasser bzw. Eis auch spezielle Salze oder Paraffine zum Einsatz. Nachdem PCM-Speicher zunächst nur für Kühlakkus, Wärmekissen und ähnliche kleinere Objekte angewendet wurden, werden sie jetzt auch für größere Objekte eingesetzt.

So wird in DE 10 2009 058 842 A1 eine Klimaanlage für Fahrzeuge beschrieben, bei der ein Phasenwechselmaterial mit dem Fahrgastinnenraum und/oder mit Antriebskomponenten des Fahrzeugs in thermischen Kontakt bringbar ist. Diese technische Lösung ist für Fahrzeuge mit einem elektromotorischen Antrieb konzipiert. Es werden Ausführungen beschrieben, bei denen der Fahrgastraum beheizt wird, indem Wärme aus einem Phasenwechselmaterial in den Fahrgastraum geleitet wird oder bei denen der Fahrgastraum gekühlt wird, indem Wärme aus dem Fahrgastraum in ein Phasenwechselmaterial geleitet wird oder indem Kälte aus einem Phasenwechselmaterial in den Fahrgastraum geleitet wird.

Für Schienenfahrzeuge ist ein ähnlicher Lösungsansatz aus EP 2 570 280 B1 bekannt. Die technische Lösung betrifft die Kühlung der Luft im Fahrgastraum unter Verwendung eines Kältekreislaufs zum Durchführen von Kühlzyklen. Im ersten Kühlzyklus wird mehr Kälte erzeugt als aktuell zur Kühlung des Fahrgastraumes notwendig ist. Dieser Kälteüberschuss wird in einer Kälte-Speichereinheit gespeichert, die als ein PCM-Speicher ausgestaltet ist. Im zweiten Kühlzyklus wird die gespeicherte Kälte in bestimmten Betriebszuständen aus der Kälte-Speichereinheit entnommen und ebenfalls für die Kühlung der Luft im Fahrgastraum verwendet. Die Ausführung eines ersten oder eines zweiten Kühlzyklus ist davon abhängig, ob sich das Schienenfahrzeug in einer Bremsphase oder in einer Rollphase befindet. Dieser Fundstelle sind jedoch keine Hinweise auf den Betrieb eines PCM-Speichers in Abhängigkeit der Fahrt außerhalb oder innerhalb eines Tunnels zu entnehmen

In EP 3 290 288 B1 wird eine Klimaanlage für Schienenfahrzeuge beschrieben, bei der die beim Durchfahren von Tunneln erforderliche Kälte vorab einem Speicher zugeführt und diesem während der Fahrt im Tunnel wieder entnommen wird. Das System umfasst mehrere im Fahrzeug verteilte Kühleinheiten, eine Kältemaschine, welche diese Kühleinheiten mit Kälte versorgt und eine Speichereinheit, die ebenfalls von der Kältemaschine mit Kälte beladen werden kann. Außerhalb von einem Tunnel oder einem ähnlichen teilweise umschlossenen Abschnitt des Fahrweges versorgt die Kältemaschine die Kühleinheiten der Klimaanlage mit Kälte. Sofern dabei ein Überschuss an Kälteleistung vorhanden ist, wird dieser Kälteüberschuss in die Speichereinheit beladen. Die gespeicherte Kälte wird bei längeren Tunnelfahrten aus der Speichereinheit entnommen und den Baugruppen zur Kühlung des Fahrgastraumes zugeführt. Dabei wird die Kältemaschine abgeschaltet und gibt keine zusätzliche Wärme an den Tunnelraum ab. Nachteilig ist jedoch, dass die Kälte-Speichereinheit nur beladen wird, sofern ein Kälteüberschuss vorliegt. Somit ist die aus der Kälte-Speichereinheit verfügbare Kältemenge bei längeren Tunnelpassagen oder bei kurz aufeinanderfolgenden Fahrtabschnitten durch mehrere Tunnel oftmals nicht ausreichend. Demzufolge kann die Kältemaschine nicht oder nur zeitweise abgeschaltet werden, so dass abschnittsweise weiterhin stark erwärmte Luft in den Tunnel abgeführt wird.

DE 198 60 057 A1 beschreibt eine Fahrzeugklimaanlage, umfassend einen primären Kältemittel-Kühlkreislauf, einen sekundären Wasser-Glykol-Kreislauf sowie einen diese hintereinander verbindenden Plattenwärmetauscher. Im Sekundärkreislauf sind ein Kältespeicher und ein Wärmetauscher hintereinander angeordnet. Dies ermöglicht eine Klimatisierung, sofern der Primärkreislauf nicht in Betrieb ist.

Aufgabe der Erfindung ist es, eine Klimaanlage für Schienenfahrzeuge mit einer als PCM-Speicher ausgeführten Kälte-Speichereinheit so auszugestalten, dass eine derart große Kältemenge aus einem Phasenwechselmaterial des PCM-Speichers in den Fahrgastraum geleitet werden kann, dass während längerer Tunnelfahrten die für eine Kälteerzeugung konzipierte Kältemaschine der Klimaanlage weitgehend außer Betrieb gesetzt und somit die Abgabe größerer Wärmemengen aus dem Schienenfahrzeug in den Tunnel vermieden wird.

Diese Aufgabe wird gelöst, indem der Kühlkreislauf in einen primären Kreislauf mit einem Kältemittel und in einen sekundären Kreislauf mit einem Wasser-Glykol-Gemisch unterteilt ist, wobei der primäre Kreislauf die Kälteleistung für die Klimatisierung des Fahrgastraumes und für die Beladung des PCM-Speichers bereitstellt und wobei die Kälteleistung über einen Plattenwärmetauscher auf den sekundären Kreislauf übertragen wird.

Im sekundären Kreislauf sind in Strömungsrichtung hintereinander der PCM-Speicher und ein Wasserwärmetauscher zur Kühlung der Luft im Fahrgastraum angeordnet. Somit kann für die Kälte-Speichereinheit ein tieferes Temperaturniveau realisiert werden. Das dadurch etwas höhere Temperaturniveau des Kälteträgers beim Austritt aus der Kälte-Speichereinheit ist noch ausreichend für den Wärmeübertrager zum Fahrgastraum. Die Kälte-Speichereinheit befindet sich somit auf einem tieferen Temperaturniveau als der Wärmeübertrager zum Fahrgastraum. Beim Betrieb aus der Kälte-Speichereinheit erfolgt keine signifikante Änderung des Temperaturniveaus im Vergleich zum Betrieb mit laufender Kältemaschine.

Das Phasenwechselmaterial ist in Form kleiner plattenförmiger Segmente ausgestaltet, in einem Behälter des PCM-Speichers angeordnet und in diesem Behälter vom Wasser-Glykol-Gemisch des sekundären Kreislaufs umströmt.

Am PCM-Speicher und am Wasserwärmetauscher im sekundären Kreislauf ist jeweils eine Bypassleitung angeordnet, die in Abhängigkeit der aktuellen Betriebsart der Klimaanlage mit einem Dreiwegeventil freigegeben oder abgesperrt wird.

Verfahrenstechnisch wird diese Klimaanlage so betrieben, dass während des Fahrbetriebes eines Schienenfahrzeuges außerhalb von einem Tunnel die Kältemaschine primär die Kälte-Speichereinheit mit Kälte belädt und dass bei einem Nichtbetrieb der Kältemaschine die im PCM-Speicher gespeicherte Kälteenergie dem Wasserwärmetauscher zugeführt wird. Dabei sind verschiedene Alternativen möglich:
So kann die Kältemaschine im Fahrbetrieb außerhalb vom Tunnel zunächst ausschließlich die Kälte-Speichereinheit mit Kälte beladen und erst nach einer vollständigen Beladung der Kälte-Speichereinheit Kälte für die Kühlung des Fahrgastraumes zur Verfügung stellen.

Vorzugsweise wird die Klimaanlage allerdings im Parallelbetrieb eingesetzt, indem die Kältemaschine im Fahrbetrieb außerhalb von einem Tunnel die Kälte-Speichereinheit mit Kälte belädt und gleichzeitig auch Kälte für die Kühlung des Fahrgastraumes zur Verfügung stellt. Bei dieser Variante ist vorzugsweise das prozentual anteilige Verhältnis der Beladung bzw. Bereitstellung von Kälte für die Kälte-Speichereinheit und den Fahrgastraum einstellbar. Als Grundlage einer diesbezüglichen Regelung oder Steuerung können z.B. die Topographie des Fahrweges, Innen- und Außentemperaturen, Anzahl der Fahrgäste, Häufigkeit und Zeitdauer des Türöffnens an Bahnhöfen und ähnliche Parameter berücksichtigt werden. Unabhängig von der konkret ausgewählten Variante kann die Kühlung des Fahrgastraumes weiter optimiert werden, sobald die Kälte-Speichereinheit beladen ist. Dabei sind wechselnde Prioritäten bei der Aufteilung der zur Verfügung stehenden Kälteleistung zwischen dem Fahrgastraum und der Kälte-Speichereinheit möglich, von denen nachfolgend drei mögliche Alternativen benannt werden:
a) Verzicht auf die Beladung der Kälte-Speichereinheit bei sehr großem Kälteleistungsbedarf im Fahrgastraum, beispielsweise typisch für Berufsverkehr im Nahverkehr (sog. Rush Hour)
b) ausschließliche Beladung der Kälte-Speichereinheit bei geringem Kälteleistungsbedarf unter Ausnutzung des oberen Temperaturgrenzwertes für den Fahrgastraum
c) gezieltes vorausschauendes Absenken der Temperatur im Fahrgastraum im Rahmen des zulässigen Temperaturregelbereiches und somit Nutzung des Fahrgastraums als Speicher

Die erfindungsgemäße technische Lösung ergibt mehrere Vorteile gegenüber den bisher üblichen Ausführungen. So muss ein Kalt-Energiespeicher weniger Energie speichern als ein Warm-Energiespeicher, da die Kompressorenergie nicht gespeichert werden muss. Es wird eine bessere Leistungszahl (COP) als Verhältnis von erzeugter Kälteleistung zur hierfür aufgebrachten Energie im Speichermodus erreicht. Ein weiterer Vorteil besteht darin, dass durch Kombination mit einem sekundären Kühlkreislauf die Menge des verwendeten Kältemittels reduziert wird. Ebenso sind weniger Baugruppen notwendig, da derselbe Wärmetauscher zur Kühlung der Zuluft im Hybridbetrieb und im konventionellen Kühlbetrieb verwendet wird. Eine Änderung des Zuluftstroms durch einen weiteren Wärmetauscher ist nicht erforderlich.

Die erfindungsgemäße technische Lösung ist vorzugsweise für Hochgeschwindigkeitszüge im Langstreckenverkehr und für Nahverkehrszüge in Ballungszentren geeignet, bei denen der Fahrweg längere Tunnelabschnitte oder ähnliche umschlossene Fahrwegabschnitte aufweist. Unabhängig vom beanspruchten Erfindungsgegenstand können auch Betriebszeiten ohne Energieversorgung überbrückt werden, z.B. zur Vorkühlung von abgestellten Schienenfahrzeugen vor Betriebsbeginn bei hohen Außentemperaturen oder zur Notkühlung bei plötzlich auftretenden Havariefällen. Dabei wird unabhängig vom konkreten Anwendungsfall eine derart große Kältemenge aus dem Phasenwechselmaterial eines PCM-Speichers in den Fahrgastraum geleitet, dass auch bei Nichtbetrieb der für die Kälteerzeugung konzipierten Kältemaschine der Klimaanlage eine ausreichende Kühlung des Fahrgastraumes ohne Abgabe größerer Wärmemengen aus dem Schienenfahrzeug gewährleistet ist.

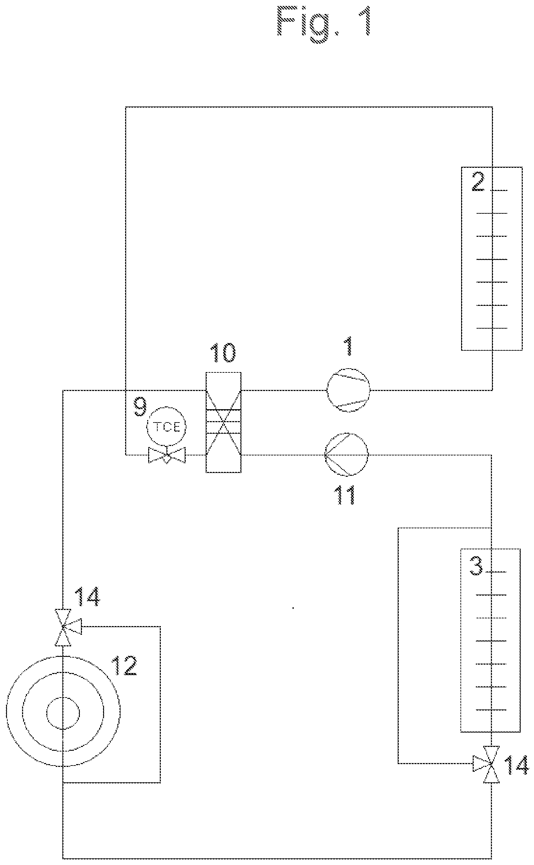

Nachfolgend wird ein Ausführungsbeispiel der Erfindung näher erläutert. Hierfür zeigt
- Fig. 1: den grundsätzlichen Aufbau einer erfindungsgemäß ausgeführten Klimaanlage für ein Schienenfahrzeug mit einem PCM-Speicher als Kälte-Speichereinheit

Die in Fig. 1 stilisiert dargestellte Klimaanlage ist für ein Schienenfahrzeug konzipiert und umfasst eine Kältemaschine 1 und eine Kälte-Speichereinheit 12. Die Kälte-Speichereinheit 12 ist als PCM-Speicher mit Phasenwechselmaterial ausgestaltet. Von der Kältemaschine 1 werden die für eine Klimatisierung des Fahrgastraumes (nicht dargestellt) notwendige Kälteleistung und die für eine Beladung des PCM-Speichers 12 notwendige Kälteleistung bereitgestellt. Die im PCM-Speicher 12 gespeicherte Kälte wird in ausgewählten Betriebszuständen des Schienenfahrzeuges - erfindungsgemäß während der Fahrt in einem Tunnel - den Baugruppen zur Klimatisierung des Fahrgastraumes zugeführt.

Aus der Zeichnung ist ersichtlich, dass der Kühlkreislauf in einen primären Kreislauf (OBEN) mit einem Kältemittel und in einen sekundären Kreislauf (UNTEN) mit einem Wasser-Glykol-Gemisch unterteilt ist. Als Kältemittel für den primären Kreislauf sind alle verfügbaren Kältemittel geeignet, also sowohl synthetische (z.B. R134a) als auch natürliche (z.B. CO₂ oder Propan) Kältemittel.

Der primäre Kreislauf mit der Kältemaschine 1, einem Kondensator 2 und einem Expansionsventil 9 stellt die Kälteleistung zur Klimatisierung des Fahrgastraumes und zur Beladung des PCM-Speichers 12 bereit.

Hierfür wird die Kälteleistung vom primären Kreislauf über einen Plattenwärmetauscher 10 auf den sekundären Kreislauf übertragen. In diesem sekundären Kreislauf sind ausgehend vom Plattenwärmetauscher 10 in Strömungsrichtung hintereinander der PCM-Speicher 12 und ein Wasserwärmetauscher 3 zur Kühlung der Luft im Fahrgastraum angeordnet. Nach dem Wasserwärmetauscher 3 ist im Strömungsverlauf eine Wasserpumpe 11 angeordnet, die wiederum mit dem Plattenwärmetauscher 10 in Wirkverbindung steht.

Das nicht näher dargestellte Phasenwechselmaterial ist in Form von kleinen plattenförmigen Segmenten ausgestaltet und in einem ebenfalls nicht näher dargestellten Behälter des PCM-Speichers 12 angeordnet. In diesem Behälter wird das Phasenwechselmaterial vom Wasser-Glykol-Gemisch des sekundären Kreislaufs umströmt. Als Phasenwechselmaterial sind weitgehend alle am Markt hierfür verfügbaren Materialen geeignet, vorzugsweise Paraffine mit einem Schmelzpunkt von 0 bis 15° C oder Wasser.

Weiterhin stehen der PCM-Speicher 12 und der Wasserwärmetauscher 3 im sekundären Kreislauf jeweils mit einem separaten Dreiwegeventil 14 in Wirkverbindung. Dabei sind die zwei Dreiwegeventile 14 so schaltbar, dass PCM-Speicher 12 und Wasserwärmetauscher 3 in Abhängigkeit der aktuellen Betriebsart der Klimaanlage über eine jeweils zugeordnete Bypassleitung umgangen werden können.

Eine derart aufgebaute Klimaanlage wird so betrieben, dass während des Fahrbetriebes eines Schienenfahrzeuges außerhalb von einem Tunnel die Kältemaschine 1 primär die Kälte-Speichereinheit / PCM-Speicher 12 mit Kälte belädt. Dabei kann gleichzeitig die Kälte-Speichereinheit 12 mit Kälte beladen und Kälte für die Kühlung des Fahrgastraumes zur Verfügung gestellt werden. In diesem Betriebszustand ist das prozentual anteilige Verhältnis der Beladung bzw. Bereitstellung von Kälte für die Kälte-Speichereinheit 12 und für den Fahrgastraum einstellbar. Alternativ ist es auch möglich, dass zunächst ausschließlich die Kälte-Speichereinheit 12 mit Kälte beladen wird und erst nach einer vollständigen Beladung der Kälte-Speichereinheit 12 Kälte für die Kühlung des Fahrgastraumes zur Verfügung gestellt wird. Sofern die Kältemaschine 1 nicht betrieben wird, also erfindungsgemäß während der Fahrt in einem Tunnel, wird die im PCM-Speicher 12 gespeicherte Kälteenergie dem Wasserwärmetauscher 3 zugeführt.

### Bezugszeichenliste

1 Kältemaschine
2 Kondensator
3 Wasserwärmetauscher
9 Expansionsventil
10 Plattenwärmetauscher
11 Wasserpumpe
12 Kälte-Speichereinheit / PCM-Speicher
14 Dreiwegeventil

## Patentansprüche

1. Schienenfahrzeug mit einer Klimaanlage mit
mindestens einer Kältemaschine (1) und
einer Kälte-Speichereinheit, die als ein PCM-Speicher (12) mit Phasenwechselmaterial ausgestaltet ist, wobei
mittels der Kältemaschine die für eine Klimatisierung des Fahrgastraumes notwendige erste Kälteleistung und die für eine Beladung des PCM-Speichers notwendige zweite Kälteleistung bereitgestellt werden, und
die im PCM-Speicher gespeicherte Kälte in ausgewählten Betriebszuständen des Schienenfahrzeuges den Baugruppen zur Klimatisierung des Fahrgastraumes zugeführt wird,
der Kühlkreislauf in einen primären Kreislauf mit einem Kältemittel und in einen sekundären Kreislauf unterteilt ist, wobei
im primären Kreislauf die Kältemaschine angeordnet ist,
zwischen dem primären Kreislauf und dem sekundären Kreislauf ein Plattenwärmetauscher (10) angeordnet ist,
im sekundären Kreislauf in Strömungsrichtung hintereinander der PCM-Speicher (12) und ein Wasserwärmetauscher (3) angeordnet sind, und
im sekundären Kreislauf am PCM-Speicher (12) und am Wasserwärmetauscher (3) jeweils eine Bypassleitung angeordnet ist, die in Abhängigkeit der aktuellen Betriebsart der Klimaanlage mit jeweils einem Dreiwegeventil (14) freigebbar oder absperrbar ist,
die Klimaanlage während einer ersten Betriebsart so betrieben wird, dass die im PCM-Speicher (12) gespeicherte Kälte für die Kühlung des Fahrgastraumes zur Verfügung gestellt wird, und
die Klimaanlage während einer zweiten Betriebsart so betrieben wird, dass die Kältemaschine primär den PCM-Speicher (12) mit Kälte belädt,
**dadurch gekennzeichnet, dass**
der sekundäre Kreislauf ein Wasser-Glykol-Gemisch aufweist,
das Phasenwechselmaterial in Form von kleinen plattenförmigen Segmenten ausgestaltet, in einem Behälter des PCM-Speichers (12) angeordnet und in diesem Behälter vom Wasser-Glykol-Gemisch des sekundären Kreislaufs umströmt ist, und
die Wahl zwischen ersten und zweiter Betriebsart davon abhängt, ob das Schienenfahrzeug sich in einem Tunnel befindet oder nicht.

2. Verfahren zum Betrieb eines Schienenfahrzeugs nach Anspruch 1, wobei in dem Verfahren:
während des Fahrbetriebes des Schienenfahrzeuges außerhalb von einem Tunnel, die Kältemaschine (1) die Kälte-Speichereinheit (PCM-Speicher 12) mit Kälte belädt, und
während des Fahrbetriebs des Schienenfahrzeugs innerhalb eines Tunnel, die Kältemaschine (1) nicht betrieben und die im PCM-Speicher (12) gespeicherte Kälteenergie dem Wasserwärmetauscher (3) zugeführt wird.

3. Verfahren nach Anspruch 2, wobei die Kältemaschine (1) während des Fahrbetriebes des Schienenfahrzeuges außerhalb von einem Tunnel gleichzeitig die Kälte-Speichereinheit (12) mit Kälte belädt und Kälte für die Kühlung des Fahrgastraumes zur Verfügung stellt.

4. Verfahren nach Anspruch 3, **dadurch gekennzeichnet, dass** das prozentual anteilige Verhältnis der Beladung bzw. Bereitstellung von Kälte für die Kälte-Speichereinheit (12) und den Fahrgastraum einstellbar ist.

5. Verfahren nach Anspruch 2, **dadurch gekennzeichnet, dass** die Kältemaschine (1) während des Fahrbetriebes des Schienenfahrzeuges außerhalb von einem Tunnel zunächst ausschließlich die Kälte-Speichereinheit (12) mit Kälte belädt und erst nach einer vollständigen Beladung der Kälte-Speichereinheit (12) Kälte für die Kühlung des Fahrgastraumes zur Verfügung stellt.

## Claims

1. Rail vehicle comprising an air conditioning system having
at least one refrigeration machine (1) and
a cold storage unit designed as a PCM storage (12) with phase change material,
the refrigeration machine providing the first cooling capacity necessary for air conditioning the passenger compartment and the second cooling capacity necessary for charging the PCM storage, and
the cold stored in the PCM storage being supplied to the air conditioning assemblies of the passenger compartment in selected operating conditions of the rail vehicle,
the cooling circuit being divided into a primary circuit having a refrigerant and into a secondary circuit,
the refrigeration machine being arranged in the primary circuit,
a plate heat exchanger (10) being arranged between the primary circuit and the secondary circuit,
in the secondary circuit, the PCM storage (12) and a water heat exchanger (3) being arranged one after the other in the direction of flow, and
in the secondary circuit, a bypass line being arranged both at the PCM storage (12) and at the water heat exchanger (3), which bypass line can be opened or closed in each case by means of a three-way valve (14), depending on the current operating mode of the air conditioning system,
the air conditioning system being operated during a first operating mode in such a way that the cold stored in the PCM storage (12) is provided for cooling the passenger compartment, and
the air conditioning system being operated during a second operating mode in such a way that the refrigeration machine primarily charges the PCM storage (12) with cold,
**characterized in that**
the secondary circuit contains a water-glycol mixture,
the phase change material is designed in the form of small plate-shaped segments, arranged in a container of the PCM storage (12) and is surrounded in this container by the water-glycol mixture of the secondary circuit, and
the choice between the first and second operating modes depends on whether the rail vehicle is in a tunnel or not.

2. Method for operating a rail vehicle according to claim 1, wherein in the method:
during the vehicle operation of the rail vehicle outside of a tunnel, the refrigeration machine (1) charges the cold storage unit (PCM storage 12) with cold, and
during the vehicle operation of the rail vehicle within a tunnel, the refrigeration machine (1) is not operated and the cooling energy stored in the PCM storage (12) is supplied to the water heat exchanger (3).

3. Method according to claim 2, wherein the refrigeration machine (1) simultaneously charges the cold storage unit (12) with cold during the vehicle operation of the rail vehicle outside of a tunnel and provides cold for cooling the passenger compartment.

4. Method according to claim 3, **characterized in that** the percentage ratio of the charging or provision of cold for the cold storage unit (12) and the passenger compartment is adjustable.

5. Method according to claim 2, **characterized in that** during the vehicle operation of the rail vehicle outside of a tunnel, the refrigeration machine (1) initially only charges the cold storage unit (12) with cold and only after the cold storage unit (12) is fully charged does it provide cold for cooling the passenger compartment.

## Revendications

1. Véhicule ferroviaire comportant un système de climatisation comportant au moins un groupe frigorifique (1) et
une unité de stockage de froid qui est conçue comme un accumulateur PCM (12) à matériau à changement de phase, dans lequel
la première puissance frigorifique nécessaire à la climatisation de l'habitacle et la seconde puissance frigorifique nécessaire au chargement de l'accumulateur PCM sont fournies par le groupe frigorifique, et
le froid stocké dans l'accumulateur PCM est acheminé, dans des états de fonctionnement sélectionnés du véhicule ferroviaire, vers les modules pour la climatisation de l'habitacle,
le circuit de refroidissement est divisé en un circuit primaire comportant un fluide frigorigène et en un circuit secondaire, dans lequel
le groupe frigorifique est disposé dans le circuit primaire,
un échangeur de chaleur à plaques (10) est disposé entre le circuit primaire et le circuit secondaire,
dans le circuit secondaire, l'accumulateur PCM (12) et un échangeur de chaleur à eau (3) sont disposés l'un derrière l'autre dans le sens de l'écoulement, et
dans le circuit secondaire, respectivement une conduite de dérivation est disposée au niveau de l'accumulateur PCM (12) et de l'échangeur de chaleur à eau (3), laquelle peut être ouverte ou fermée à l'aide de respectivement une vanne à trois voies (14) en fonction du mode de fonctionnement actuel du système de climatisation,
le système de climatisation fonctionne, dans un premier mode de fonctionnement, de sorte que le froid stocké dans l'accumulateur PCM (12) est mis à disposition pour le refroidissement de l'habitacle, et
le système de climatisation fonctionne, dans un second mode de fonctionnement, de sorte que le groupe frigorifique charge principalement l'accumulateur PCM (12) avec du froid,
**caractérisé en ce que**
le circuit secondaire présente un mélange eau-glycol,
le matériau à changement de phase se présente sous la forme de petits segments en forme de plaques, est disposé dans un réservoir de l'accumulateur PCM (12) et est traversé, dans ce réservoir, par le mélange eau-glycol du circuit secondaire, et
le choix entre le premier et le second mode de fonctionnement dépend du fait que le véhicule ferroviaire se trouve ou non dans un tunnel.

2. Procédé permettant de faire fonctionner un véhicule ferroviaire selon la revendication 1, dans lequel, dans le procédé :
pendant le mode de fonctionnement du véhicule ferroviaire hors d'un tunnel, le groupe frigorifique (1) charge l'unité de stockage de froid (accumulateur PCM 12) avec du froid, et
pendant le mode de fonctionnement du véhicule ferroviaire dans un tunnel, le groupe frigorifique (1) ne fonctionne pas et l'énergie frigorifique stockée dans l'accumulateur PCM (12) est acheminée vers l'échangeur de chaleur à eau (3).

3. Procédé selon la revendication 2, dans lequel, pendant le mode de fonctionnement du véhicule ferroviaire hors d'un tunnel, le groupe frigorifique (1) charge l'unité de stockage de froid (12) avec du froid et met à disposition du froid pour le refroidissement de l'habitacle simultanément.

4. Procédé selon la revendication 3, **caractérisé en ce que** le rapport, exprimé en pourcentage, entre la charge ou la fourniture de froid pour l'unité de stockage de froid (12) et celle pour l'habitacle est réglable.

5. Procédé selon la revendication 2, **caractérisé en ce que,** pendant le mode de fonctionnement du véhicule ferroviaire hors d'un tunnel, le groupe frigorifique (1) charge d'abord exclusivement l'unité de stockage de froid (12) avec du froid et ne met à disposition du froid pour le refroidissement de l'habitacle qu'après le chargement complet de l'unité de stockage de froid (12).
